# EUROPÄISCHE PATENTSCHRIFT

(11) **EP 2 732 741 B1**
(45) Veröffentlichungstag und Bekanntmachung des Hinweises auf die Patenterteilung: **02.08.2017**
(21) Anmeldenummer: 12401233.7
(22) Anmeldetag: 16.11.2012
(51) Int. Cl.: A47J 31/46

(54) **Getränkebereiter mit einem Zentralauslauf**
Beverage-preparing machine with a central discharge
Dispositif de préparation de boissons avec une sortie centrale

(43) Veröffentlichungstag der Anmeldung: 21.05.2014
(73) Patentinhaber: Miele & Cie. KG, 33332 Gütersloh (DE)
(72) Erfinder: Jungclaus, Dirk, 59302 Oelde (DE); Wüstefeld, Michael, 59555 Lippstadt (DE); van Pels, Ulrich, 33378 Rheda-Wiedenbrück (DE)

(56) Entgegenhaltungen:
- EP-A1- 2 189 085
- EP-A1- 2 345 354
- EP-A1- 2 596 728
- EP-A1- 2 721 976
- DE-A1-102010 038 112

## Beschreibung

Die Erfindung betrifft einen Getränkebereiter mit einem Zentralauslauf.

Der Zentralauslauf eines Getränkebereiters kommt zur Abgabe eines Getränkes oder eines Getränkegemisches und/oder von Wasser beziehungsweise Wasserdampf zum Einsatz, wobei der Wasserdampf beispielsweise zum Aufschäumen eines Getränkes oder zur Erzeugung von Schaum, insbesondere von Milchschaum benötigt wird. Daher weist der Zentralauslauf mehrere, mit einem Strömungsleitungssystem verbundene Fluidanschlussstutzen und eine Ausgabeeinrichtung auf, die ihrerseits strömungsleitend mit den Fluidanschlussstutzen verbunden ist, sodass die Fluidanschlussstutzen letztlich mittelbar oder unmittelbar in die Ausgabeeinrichtung münden.

Aus der EP 2 186 454 A1 ist bereits ein Getränkebereiter in Form eines Kaffeeautomaten bekannt, bei dem der Zentralauslauf derart gestaltet ist, dass wahlweise ein gemeinsames Befüllen von zwei Getränkebehältern oder lediglich eines einzigen Getränkebehälters möglich ist. Die Lösung betrifft daher einen Zentralauslauf mit einer Kanalgabel, deren Teilkanäle je eine Ausgabeleitung bilden und in die je ein Kaffeezuführkanal mündet. Zwar konnte mit diesem Zentralauslauf die Zahl der Bauteile entscheidend verringert werden. Ein Nachteil dieser Lösung besteht jedoch darin, dass im Falle einer erforderlichen Reinigung, Wartung oder Reparatur des Zentralauslaufs ein Auseinandernehmen beziehungsweise Zusammensetzen der zahlreichen Einzelteile erforderlich, jedoch erheblich erschwert ist, da diese Einzelteile des Zentralauslaufs separat aus dem Getränkebereiter entfernt beziehungsweise wieder eingesetzt werden müssen. Auf Grund der Platz sparenden Anordnung sämtlicher Bauteile in dem Getränkebereiter ist diese Tätigkeit mühselig und kompliziert. Dieser Umstand ist insbesondere von Bedeutung, weil die Reinigung der Bauteile häufig nicht von einem Fachmann, sondern von Privatpersonen durchgeführt werden muss, die einen derartigen Getränkebereiter besitzen.

Eine ähnliche Lösung mit analogen Nachteilen geht auch aus der EP 2 301 396 A1 hervor.

Aus der DE 10 2010 038 112 A1 ist ein Zentralauslauf bekannt, der ein Gehäuse mit darin angeordneten Fluidanschlussstutzen umfasst. Über das Gehäuse ist der Zentralauslauf mittels einer Arretiereinrichtung lösbar in dem Getränkebereiter fixiert. Das Gehäuse ist dabei so dimensioniert, dass es nahezu formschlüssig in einen gehäuseseitigen Ausnahmekanal eingeschoben werden kann, sodass sich in der vorbestimmten Gebrauchsposition die angeformten Rasthaken verrasten können.

Der Erfindung stellt sich somit das Problem, einen Getränkebereiter zur Verfügung zu stellen, wobei der Zentralauslauf einfach zu montieren und zuverlässig in dem Getränkebereiter fixierbar sein sollte.

Erfindungsgemäß wird dieses Problem durch einen Getränkebereiter mit den Merkmalen des Patentanspruchs 1 gelöst.

Vorteilhafte Ausgestaltungen und Weiterbildungen der Erfindung ergeben sich aus den sich jeweils anschließenden Unteransprüchen.

Ein Zentralauslauf eines Getränkebereiters, mit verschiedenen Fluidanschlussstutzen, die in mindestens eine, zur Ausgabe eines Getränkes oder eines Getränkegemisches geeignete Ausgabeeinrichtung münden, wurde erfindungsgemäß dahingehend weitergebildet, dass der Zentralauslauf zur lösbaren Fixierung in dem Getränkebereiter geeignet ist.

Die Vorteile einer derartigen Eignung bestehen insbesondere in der Möglichkeit, den Zentralauslauf auf einfache Weise in den Getränkebereiter einzusetzen beziehungsweise ihn aus dem Getränkebereiter zu entnehmen. Darüber hinaus ist der in den Getränkebereiter eingesetzte Zentralauslauf darin fixiert, so dass ein selbsttätiges Lösen ausgeschlossen werden kann. Diese Maßnahme wirkt sich demzufolge auch auf die Dichtheit und Zuverlässigkeit des Strömungsleitungssystems vorteilhaft aus.

Gemäß der Erfindung wird vorgeschlagen, dass der Zentralauslauf des Getränkebereiters durch eine Arretiereinrichtung lösbar in dem Getränkebereiter fixiert ist. Eine derartige Arretiereinrichtung ermöglicht folglich eine Art Schnelllösemechanismus, sodass der Zentralauslauf auf einfache Weise und in kürzester Zeit in den Getränkebereiter eingesetzt beziehungsweise aus diesem entnommen werden kann.

Wird entsprechend dieser Lösung der Zentralauslauf in einen Halter eingesetzt oder als Bestandteil dieses Halters ausgeführt, so kann der Zentralauslauf zusammen mit dem Halter durch die Arretiereinrichtung lösbar in dem Getränkebereiter fixiert werden. Die zusätzliche Verwendung eines Halters ermöglicht es, den gesamten, in der Regel aus mehreren Einzelteilen zusammengesetzten Zentralauslauf mit einem Handgriff aus dem Getränkebereiter zu entfernen beziehungsweise ihn wieder in den Getränkebereiter einzusetzen. Dabei ist es für die Ausführbarkeit dieses Lösungsvorschlages unerheblich, ob der Zentralauslauf einstückig mit dem Halter ausgeführt und demzufolge bereits bei seiner Fertigung zusammen mit dem Halter hergestellt wird oder ob Zentralauslauf und Halter zwei getrennte Bauteile sind, die sich über eine einfache Verbindungsmechanik zusammensetzen lassen.

Besonders einfach zu fertigen und zu montieren ist eine Arretiereinrichtung, die eine Führung in dem Getränkebereiter bildet, in die der Halter und/oder der Zentralauslauf einschiebbar ist. Mit anderen Worten wird beispielsweise in dem Getränkebereiter wenigstens eine Führungsschiene vorgesehen, in die der Halter und/oder der Zentralauslauf einschiebbar ist. Hierbei muss lediglich berücksichtigt werden, dass die Fluidanschlussstutzen korrekt an das Strömungsleitungssystem des Getränkebereiters angeschlossen werden, was durch miteinander korrespondierende Geometrien zwischen Führung und Halter und/oder zwischen Führung und Zentralauslauf ohne weiteres realisierbar ist. Die erfindungsgemäße Arretiereinrichtung besteht darin, dass die Arretiereinrichtung wenigstens einen, den Halter und/oder den Zentralauslauf zumindest teilweise umgreifenden Widerhaken aufweist. Dabei kann der Zentralauslauf und/oder der Halter hinter den Widerhaken geschoben oder in diesen einschnappt werden, so dass dadurch bereits die Fixierung in dem Getränkebereiter möglich ist. Den Zentralauslauf und/oder den Halter mit Hilfe eines Widerhakens festzusetzen, stellt somit ein Beispiel für eine Schnapp- oder Klemmverbindung dar.

Zur Vereinfachung der Montage des Zentralauslaufs und/oder des Halters in dem Getränkebereiter wird erfindungsgemäß ferner vorgeschlagen, dass der Widerhaken begrenzt elastisch verformbar oder vollständig elastisch verformbar ist. Die elastische Verformbarkeit des Widerhakens hat zudem den Vorzug, dass Schwingungen, wie sie beispielsweise von einer in dem Getränkebereiter vorhandenen Pumpe herrühren können, über die Elastizität ausgeglichen werden und damit eine selbsttätige Lockerung der Fixierung vermieden werden kann.

Wird entsprechend einem weiterführenden Vorschlag nach der Erfindung der Halter mit mindestens einem Griff ausgestattet, so kann der Halter auf diese Weise an dem Griff erfasst werden und ist folglich einfacher zu handhaben. Die Montage beziehungsweise Demontage des Halters wird dadurch für den Anwender erleichtert.

Natürlich kann es vorkommen, dass in dem Zentralauslauf Reste der in dem Getränkebereiter verarbeiteten Flüssigkeiten enthalten sind. Um diese Flüssigkeitsreste auf einfache Weise und gründlich entfernen zu können, ist es von Vorteil, wenn der Zentralauslauf ohne Schwierigkeiten gereinigt werden kann. Darüber hinaus ist eine Reinigung des Zentralauslaufs in regelmäßigen Abständen schon aus hygienischen Gründen ohnehin erforderlich und erwünscht. Eine vereinfachte Reinigungsmöglichkeit besteht entsprechend einem weiterführenden Vorschlag nach der Erfindung darin, dass der Zentralauslauf in einer Geschirrspülmaschine gesäubert wird. Hierzu ist es hilfreich, wenn der Zentralauslauf aus dem Halter und/oder dem Getränkebereiter entfernt werden kann, ohne dass hierfür ein erheblicher Montageaufwand erforderlich wird. In diesem Zusammenhang wird deshalb vorgeschlagen, dass der Zentralauslauf aus einem flexiblen Werkstoff hergestellt ist. Als flexible Werkstoffe eignen sich in besonders vorteilhafter Weise beispielsweise Gummiwerkstoffe.

Da über die Ausgabeeinrichtungen die Getränke des Getränkebereiters oder Mischungen der einzelnen Bestandteile eines Getränkes abgegeben werden, ist es von Vorteil, wenn jede der Ausgabeeinrichtungen je eine Ausgabedüse aufweist. Über die Ausgabedüse kann die Abgabe mit hohem Druck erfolgen, so dass sich die Geschwindigkeit des Getränkebezuges erhöht.

Entsprechend einer Ausgestaltung verfügt der Getränkebereiter über einen Zentralauslauf, der wiederum einen Wasser beziehungsweise Wasserdampf führenden Fluidanschlussstutzen, einen Kaffee oder Kakao führenden Fluidanschlussstutzen und einen Milch führenden Fluidanschlussstutzen. Eine spezielle Ausführungsvariante eines mit einem erfindungsgemäßen Zentralauslauf ausgestatteten Getränkebereiters besteht folglich in einem für Kaffeegetränke oder Kakaogetränke beziehungsweise deren Gemische geeigneten Getränkebereiter.

Dieser Getränkebereiter kann gemäß einer Weiterbildung der Erfindung eine Ausgabeeinheit aufweisen, die in ihrer Höhe verstellbar ausgeführt ist und den Zentralauslauf als einen ihrer Bestandteile aufweist. Durch die Möglichkeit, die Ausgabeeinheit in ihrer Höhe zu verstellen, kann sie auf unterschiedliche Gefäßgrößen der unterhalb der Ausgabeeinheit abgestellten und mit einem Getränk oder einem Getränkegemisch zu befüllenden Gefäße justiert werden. Diese Maßnahme hat den entscheidenden Vorteil, dass auf diese Weise ein Verspritzen des mit einem gewissen Druck aus den Ausgabedüsen austretenden Getränkes beziehungsweise Getränkegemisches vermieden werden kann. Die Höhenverstellbarkeit hat jedoch auch den Vorteil, dass der in die Ausgabeeinheit eingesetzte Zentralauslauf und/oder der Halter bei vollständig heruntergefahrener Ausgabeeinheit auf einfache Weise entnommen oder eingesetzt werden kann.

Insbesondere für die gestalterische Ausführung des Getränkebereiters nach der Erfindung ist es zudem von Vorteil, wenn die Ausgabeeinheit in einer Vertiefung der Front des Getränkebereiters angeordnet ist. Auf diese Weise wird die Ausgabeeinheit vor Verunreinigungen und sichtgeschützt untergebracht. Ihre Aktivierung erfolgt demnach nur im Bedarfsfall.

Ein Getränkebereiter nach der Erfindung kann in besonders vorteilhafter Weise als ein Einbaugerät für einen Küchenschrank ausgeführt sein. Er stellt somit ein integriertes Gerät dar.

Ein Ausführungsbeispiel der Erfindung wird nachfolgend anhand der beigefügten Zeichnungen näher erläutert. Das gezeigte Ausführungsbeispiel stellt keine Einschränkung auf die dargestellte Variante dar, sondern dient lediglich der Erläuterung eines Prinzips der Erfindung. Dabei sind gleiche oder gleichartige Bauteile mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.

Es zeigt:
- Figur 1:: einen Teilzusammenbau, bestehend aus einem Zentralauslauf und einem in Zentralauslauf aufnehmenden Halter,
- Figur 2:: den Teilzusammenbau aus Figur 1 in einer rückwärtigen Ansicht,
- Figur 3:: einen in eine Ausgabeeinheit eingesetzten Halter mit einem Zentralauslauf,
- Figur 4:: eine Ausgabeeinheit mit entnommenem Zentralauslauf beziehungsweise Halter
und
- Figur 5:: die Frontansicht eines in einen Küchenschrank integrierten Getränkebereiters.

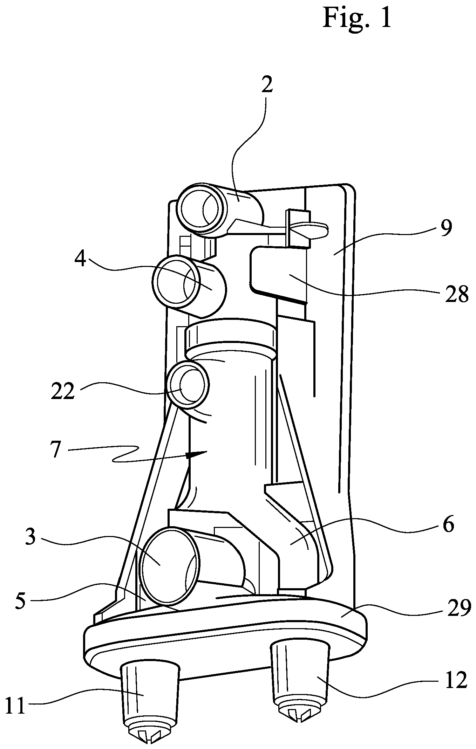

Der in Figur 1 gezeigte Teilzusammenbau besteht aus einem Halter 9, der einen Zentralauslauf 7 aufnimmt. Der überwiegend, jedoch nicht insgesamt aus einem weichelastischen Werkstoff, wie Gummi, hergestellte Zentralauslauf 7 ist dabei mittels mehrerer Klemm- beziehungsweise Steckverbindungen lösbar mit dem Halter 9 verbunden. Die Lösbarkeit des Zentralauslaufs 7 ist von Vorteil, um den Zentralauslauf 7 aus dem Halter 9 entnehmen und ihn beispielsweise in einem Geschirrspülerautomaten reinigen zu können. Hierzu sind einerseits im oberen Bereich des Halters 9 zwei ohrenartig gestaltete Klemmschuhe 28 vorhanden, die den Zentralauslauf 7 zu einem wesentlichen Teil umschließen. Andererseits sind zwei Ausgabeeinrichtungen 5 und 6 des Zentralauslaufs 7 auf korrespondierende Anschlüsse zweier, einer Getränkeausgabe dienenden Ausgabedüsen 11 und 12 aufgesteckt. An dem Zentralauslauf 7 sind zudem insgesamt drei Fluidanschlussstutzen 2, 3 und 4 ausgebildet. Da es sich bei dem dargestellten Beispiel um einen Zentralauslauf 7 für einen als Kaffeeautomaten dienenden Getränkebereiter 1 handelt, dient der Fluidanschlussstutzen 2 hierbei der Zuführung von Wasserdampf, der Fluidanschlussstutzen 3 der Zuführung von Kaffee und der Fluidanschlussstutzen 4 der Zuführung von Milch zu dem Zentralauslauf 7. Der Fluidanschlussstutzen 3 mündet in ein Verteilerelement 29, dass den zugeführten Kaffee auf die beiden, der Getränkeausgabe dienenden Ausgabedüsen 11, 12 verteilt und dementsprechend ein geeignetes Strömungsleitungssystem enthält. Das Verteilerelement 29 ist seinerseits aus einem elastischen Werkstoff hergestellt und abnehmbar ausgeführt. Es kann somit, wie auch der Zentralauslauf 7, in einer Geschirrspülmaschine gereinigt werden. Im unteren Bereich des Zentralauslaufs 7 verzweigt sich dieser in die beiden, bereits erwähnten Ausgabeeinrichtungen 5, 6, die mit je einer der Ausgabedüsen 11 beziehungsweise 12 strömungsleitend verbunden sind. Zur Sensierung des Zentralauslaufs 7 in dem Getränkebereiter 1 verfügt der Zentralauslauf 7 zudem etwa mittig über einen Magneten 22, der bei eingesetztem Zentralauslauf 7 mit einem so genannten Reed-Kontakt im Getränkebereiter 1 korrespondiert.

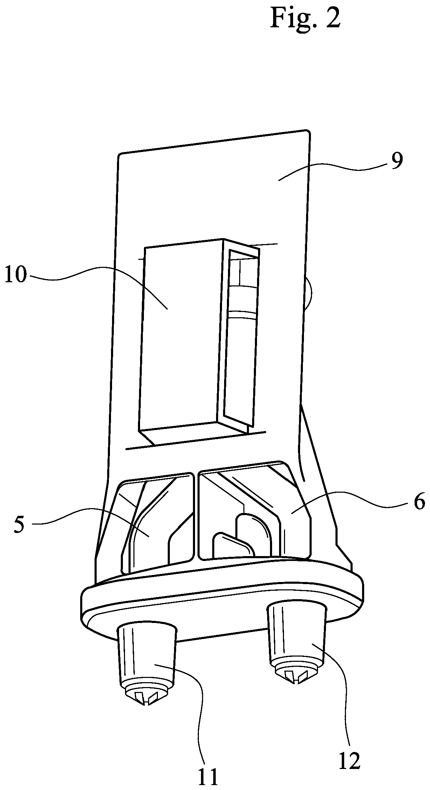

In der Figur 2 ist der Teilzusammenbau aus Figur 1 in einer rückwärtigen Ansicht dargestellt. Hieraus wird ersichtlich, dass an der Rückseite des Halters 9 ein Griff 10 angeformt ist, der das Einsetzen des Halters 9 in den Getränkebereiter 1 beziehungsweise dessen Entnahme aus dem Getränkebereiter 1 maßgeblich erleichtert. Der Griff 10 wurde bei der dargestellten Variante einstückig mit dem Halter 9 ausgebildet, sodass der Griff 10 bei der Fertigung des Halters 9 an diesen angeformt werden kann. Bevorzugt besteht der Halter 9 mit dem Griff 10 aus einem Kunststoff.

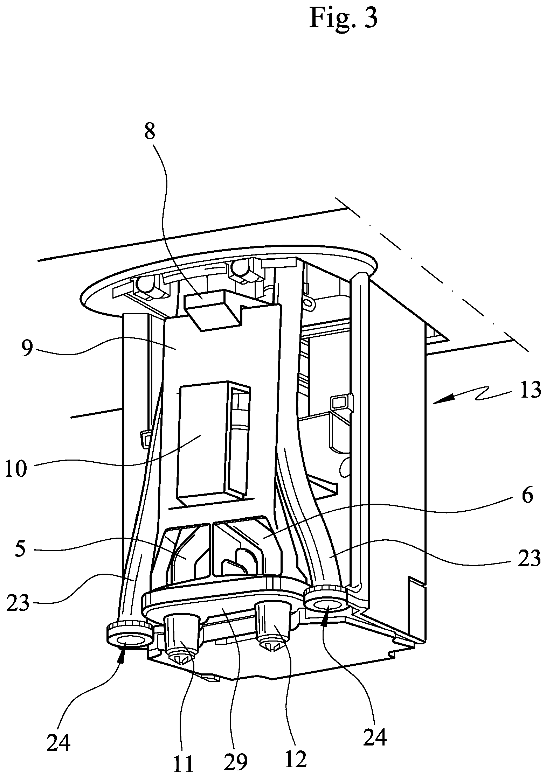

Wie der Halter 9 mit dem darauf angeordneten Zentralauslauf 7 in eine Ausgabeeinheit 13 eingesetzt wird, zeigt die Figur 3. So kann der Halter 9 an seinem Griff 10 erfasst und anschließend mit der Oberseite in eine Arretiereinrichtung 8 eingesetzt werden. Bei der Arretiereinrichtung 8 handelt es sich um einen Widerhaken, der den Halter 9 in seinem oberen Abschnitt teilweise umfasst. Der sich in seinem unteren Teil verzweigende Zentralauslauf 7 weist im Übergangsbereich zu den Ausgabedüsen 11, 12 die Ausgabeeinrichtungen 5 beziehungsweise 6 auf. Seitlich des Teilzusammenbaus, bestehend aus dem Halter 9 und dem darin eingesetzten Zentralauslauf 7 weist die Ausgabeeinheit 13 zwei Lichtleiter 23 auf, die von einer in der Figur 3 nicht dargestellten Lichtquelle gespeist werden und in je eine Lichteinheit 24 münden. Die Lichteinheiten 24 dienen an der Unterseite der Ausgabeeinheit 13 dazu, den Bereich unterhalb der Ausgabeeinheit zu beleuchten, wo ein Gefäß oder mehrere Gefäße zur Befüllung mit einem Getränk oder einem Getränkegemisch aufgestellt werden.

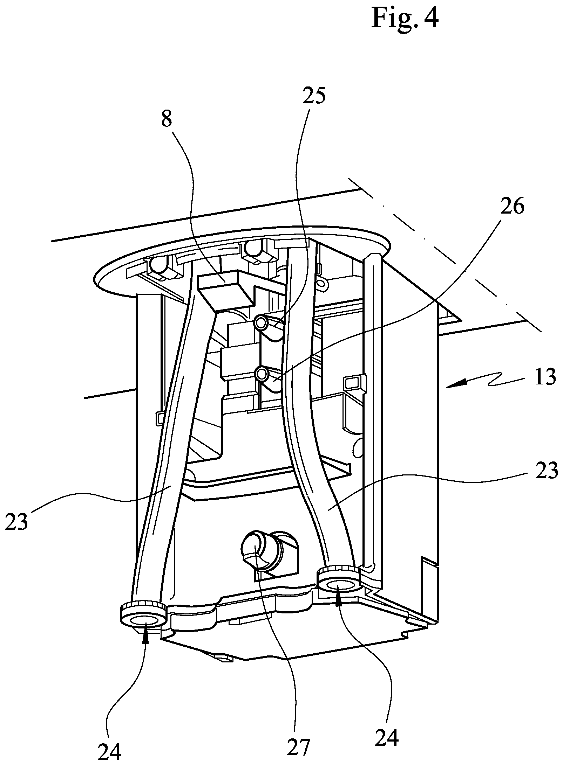

Aus der Figur 4 geht die Ausgabeeinheit 13 mit entnommenem Halter 9 und entnommenem Zentralauslauf 7 hervor, so dass auf diese Weise ein Blick in das Innere der Ausgabeeinheit 13 möglich ist. Hieraus wird erkennbar, wie der elastisch verformbare und die Arretiereinrichtung 8 bildende Widerhaken gestaltet ist. Unterhalb der Arretiereinrichtung 8 verfügt die Ausgabeeinheit 13 über einen Fluidanschlussflansch 25, in den der korrespondierende Fluidanschlussstutzen 2 des Zentralauslaufs 7 zur Zuführung von Wasserdampf eingesetzt werden kann. Analog hierzu weist die Ausgabeeinheit 13 ferner einen Fluidanschlussflansch 26 für Milch auf, der mit dem korrespondierenden Fluidanschlussstutzen 4 des Zentralauslaufs 7 zusammengeführt wird. Im unteren Teil der Ausgabeeinheit 13 ist darüber hinaus ein Fluidanschlussflansch 27 vorhanden, auf den der passende Fluidanschlussstutzen 3 zur Zuführung von Kaffee zu dem Zentralauslauf 7 aufgesetzt wird, wenn der Zentralauslauf 7 in die Ausgabeeinheit 13 eingesetzt ist. Die Fläche zwischen den Lichtleitern 23 kann dabei als ferromagnetische, metallische Fläche ausgestaltet sein, um mit dem am Zentralauslauf 7 vorhandenen Magneten 22 zu korrespondieren.

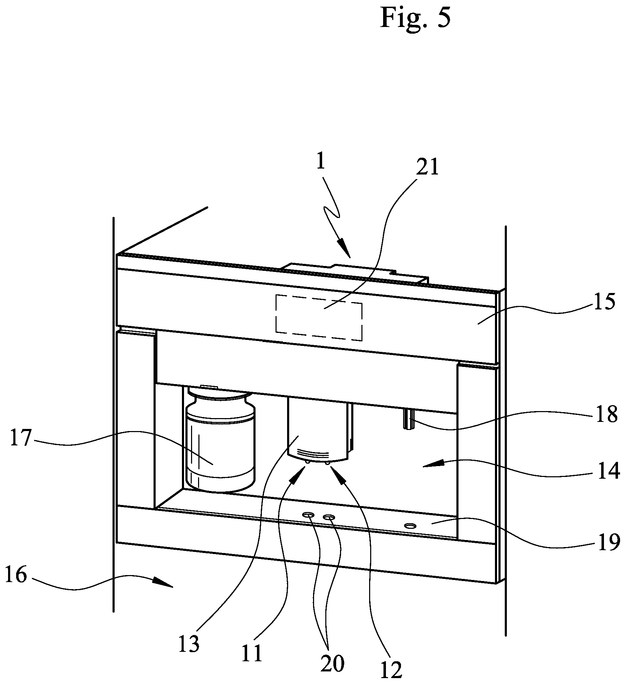

Die Figur 5 zeigt einen in einen Küchenschrank 16 eingebauten, also integrierten Getränkebereiter 1, bei dem es sich vorliegend um einen Kaffeeautomaten handelt. Dieser Getränkebereiter 1 weist im oberen Abschnitt seiner Front 15 eine nur andeutungsweise dargestellte Anzeige- beziehungsweise Eingabeeinheit 21 auf, mit deren Hilfe für die Bedienung des Getränkebereiters 1 erforderliche Informationen angezeigt werden oder über das beispielsweise Eingaben erfolgen können. Im einfachsten Fall kann die Anzeigebeziehungsweise Eingabeeinheit 21 ein digitales Display und eine Tastatur aufweisen oder sein.

In der Front 15 ist darüber hinaus eine Vertiefung 14 vorhanden, innerhalb der sich mehrere, für die Zubereitung eines Getränkes erforderliche Einrichtungen befinden. Zunächst ist in der Vertiefung 14 ein Flüssigkeitsbehälter 17 hängend angeordnet, der im vorliegenden Fall als Milchgefäß dient. Darüber hinaus kann eine separate Wasser- /Dampfdüse 18 dazu verwendet werden, heißen Wasserdampf oder heißes Wasser aus dem Getränkebereiter zu entnehmen. Heißes Wasser wird beispielsweise für die Zubereitung von Teegetränken benötigt, während Wasserdampf zum Aufschäumen der Getränke verwendet werden kann. Etwa mittig der Vertiefung 14 ist die in der Höhe verstellbare Ausgabeeinheit 13 angeordnet. Unterhalb der Ausgabeeinheit 13 sind andeutungsweise die Ausgabedüsen 11 und 12 erkennbar. Innerhalb der Ausgabeeinheit 13 befindet sich der Halter 9 mit dem darin fixierten Zentralauslauf 7. Um ein Gefäß mit einem Getränk oder einem Getränkegemisch zu befüllen, wird dieses unterhalb der Ausgabeeinheit 13 auf einem hierfür vorhandenen Abtropfblech 19 abgestellt. Anschließend kann die Ausgabeeinheit 13 in Richtung auf das Gefäß zu bewegt werden, so dass der Abstand zwischen dem Gefäßrand und der Ausgabeeinheit 13 möglichst gering ist, wenn die Getränkeabgabe erfolgt. Dies hat den Vorteil, dass möglichst wenig Flüssigkeit verspritzt wird. Dennoch ist es möglich, dass geringe Mengen des Getränkes verspritzen. Für diesen Fall und für die regelmäßig erforderliche Reinigung der Ausgabedüsen 11, 12, bei der Reinigungsflüssigkeit aus den Ausgabedüsen 11, 12 abgegeben wird, sind in dem Abtropfblech 19 diverse Öffnungen oder Schlitze 20 vorhanden, durch die diese Flüssigkeitsreste in eine unterhalb des Abtropfbleches 19 vorhandene Abtropfschale abgeführt werden.

### BEZUGSZEICHENLISTE:

- 1: Getränkebereiter
- 2: Fluidanschlussstutzen (Wasserdampf)
- 3: Fluidanschlussstutzen (Kaffee)
- 4: Fluidanschlussstutzen (Milch)
- 5: Ausgabeeinrichtung
- 6: Ausgabeeinrichtung
- 7: Zentralauslauf
- 8: Arretiereinrichtung
- 9: Halter
- 10: Griff
- 11: Ausgabedüse
- 12: Ausgabedüse
- 13: Ausgabeeinheit
- 14: Vertiefung
- 15: Front
- 16: Küchenschrank
- 17: Flüssigkeitsbehälter
- 18: Wasser-/Dampfdüse
- 19: Abtropfblech
- 20: Öffnungen / Schlitze
- 21: Anzeige- beziehungsweise Eingabeeinheit
- 22: Magnet
- 23: Lichtleiter
- 24: Lichteinheit
- 25: Fluidanschlussflansch (Wasserdampf)
- 26: Fluidanschlussflansch (Milch)
- 27: Fluidanschlussflansch (Kaffee)
- 28: Klemmschuh
- 29: Verteilerelement

## Patentansprüche

1. Getränkebereiter (1), umfassend eine Arretiereinrichtung (8) und einen Zentralauslauf (7) mit verschiedenen Fluidanschlussstutzen (2, 3, 4), die in mindestens eine, zur Ausgabe eines Getränkes oder eines Getränkegemisches geeignete Ausgabeeinrichtung (5, 6) münden, wobei der Zentralauslauf (7) zur lösbaren Fixierung in dem Getränkebereiter (1) ausgebildet ist und in einen Halter (9) eingesetzt oder Bestandteil dieses Halters (9) ist und zusammen mit dem Halter (9) durch die Arretiereinrichtung (8) lösbar in dem Getränkebereiter (1) fixiert ist, wobei die Arretiereinrichtung (8) wenigstens einen, den Halter (9) und/oder den Zentralauslauf (7) zumindest teilweise umgreifenden Widerhaken aufweist.

2. Getränkebereiter nach Anspruch 1,
**dadurch gekennzeichnet, dass**
die Arretiereinrichtung (8) eine Führung in dem Getränkebereiter (1) bildet, in die der Halter (9) und/oder der Zentralauslauf (7) einschiebbar ist.

3. Getränkebereiter nach Anspruch 1,
**dadurch gekennzeichnet, dass**
der Widerhaken wenigstens begrenzt elastisch verformbar oder vollständig elastisch verformbar ist.

4. Getränkebereiter nach einem der Ansprüche 1 bis 3,
**dadurch gekennzeichnet, dass**
der Halter (9) mindestens einen Griff (10) aufweist.

5. Getränkebereiter nach einem der vorstehend genannten Ansprüche,
**dadurch gekennzeichnet, dass**
die Zentralauslauf (7) aus einem flexiblen Werkstoff hergestellt ist.

6. Getränkebereiter nach einem der vorstehend genannten Ansprüche,
**dadurch gekennzeichnet, dass**
jede der Ausgabeeinrichtungen (5, 6) je eine Ausgabedüse (11, 12) aufweist.

7. Getränkebereiter nach einem der Ansprüche 1 bis 6,
**dadurch gekennzeichnet, dass**
der Zentralauslauf (7) einen Wasserdampf führenden Fluidanschlussstutzen (2), einen Kaffee oder Kakao führenden Fluidanschlussstutzen (3) und einen Milch führenden Fluidanschlussstutzen (4) aufweist.

8. Getränkebereiter nach einem der Ansprüche 1 bis 7,
**dadurch gekennzeichnet, dass**
der Zentralauslauf (7) Bestandteil einer in der Höhe verstellbar ausgeführten Ausgabeeinheit (13) ist.

9. Getränkebereiter nach Anspruch 8,
**dadurch gekennzeichnet, dass**
die Ausgabeeinheit (13) in einer Vertiefung (14) der Front (15) des Getränkebereiters (1) angeordnet ist.

10. Getränkebereiter nach einem der Ansprüche 1 bis 9,
**dadurch gekennzeichnet, dass**
der Getränkebereiter (1) als Einbaugerät für einen Küchenschrank (16) ausgeführt ist.

## Claims

1. Beverage preparation apparatus (1), comprising a locking device (8) and a central discharge (7) having various fluid connection pipes (2, 3, 4) which open into at least one dispensing apparatus (5, 6) that is suitable for dispensing a beverage or a beverage mixture, wherein the central discharge (7) is designed to be detachably fixed in the beverage preparation means (1) and is inserted in a holder (9) or is a component of said holder (9), and is detachably fixed, together with the holder (9), in the beverage preparation means (1) by means of the locking device (8), wherein the locking device (8) comprises at least one barb that engages around the holder (9) and/or the central discharge (7), at least in part.

2. Beverage preparation apparatus according to claim 1,
**characterised in that**
the locking device (8) forms a guide in the beverage preparation means (1), into which guide the holder (9) and/or the central discharge (7) can be pushed.

3. Beverage preparation apparatus according to claim 1,
**characterised in that**
the barb is elastically deformable at least to a limited extent or is completely elastically deformable.

4. Beverage preparation apparatus according to any of claims 1 to 3,
**characterised in that**
the holder (9) comprises at least one handle (10).

5. Beverage preparation apparatus according to any of the aforementioned claims,
**characterised in that**
the central discharge (7) is made of a flexible material.

6. Beverage preparation apparatus according to any of the aforementioned claims,
**characterised in that**
each of the dispensing apparatuses (5, 6) comprises a dispensing nozzle (11, 12).

7. Beverage preparation apparatus according to any of claims 1 to 6,
**characterised in that**
the central discharge (7) comprises a fluid connection pipe (2) that directs steam, a fluid connection pipe (3) that directs coffee or cocoa, and a fluid connection pipe (4) that directs milk.

8. Beverage preparation apparatus according to any of claims 1 to 7,
**characterised in that**
the central discharge (7) is a component of a dispensing unit (13) designed to be height-adjustable.

9. Beverage preparation apparatus according to claim 8,
**characterised in that**
the dispensing unit (13) is arranged in a recess (14) in the front (15) of the beverage preparation apparatus (1).

10. Beverage preparation apparatus according to any of claims 1 to 9,
**characterised in that**
the beverage preparation apparatus (1) is designed as a built-in device for a kitchen cupboard (16).

## Revendications

1. Dispositif de préparation de boissons (1), comprenant un mécanisme de retenue (8) et une sortie centrale (7) avec diverses tubulures de raccordement des fluides (2, 3, 4), lesquelles débouchent dans au moins un mécanisme de distribution (5, 6) apte à la distribution d'une boisson ou d'un mélange de boisson, dans lequel la sortie centrale (7) est conçue en vue d'être fixé de manière amovible dans le dispositif de préparation de boissons (1) et est insérée dans un support (9) ou est un élément constituant de ce support (9) et est fixée dans le dispositif de préparation de boissons (1), ensemble avec le support (9), de manière amovible par l'intermédiaire du mécanisme de retenue (8), dans lequel le mécanisme de retenue (8) présente au moins un ardillon qui entoure, tout au moins en partie, le support (9) et/ou la sortie centrale (7).

2. Dispositif de préparation de boissons selon la revendication 1,
**caractérisé en ce que**
le mécanisme de retenue (8) forme, dans le dispositif de préparation de boissons (1), un guidage, dans lequel le support (9) et/ou la sortie centrale (7) peuvent être insérés par coulissement.

3. Dispositif de préparation de boissons selon la revendication 1,
**caractérisé en ce que**
l'ardillon est élastiquement déformable, tout au moins de manière limitée, ou est élastiquement déformable en intégralité.

4. Dispositif de préparation de boissons selon l'une des revendications 1 à 3,
**caractérisé en ce que**
le support (9) présente au moins une poignée (10).

5. Dispositif de préparation de boissons selon l'une des revendications citées ci-dessus,
**caractérisé en ce que**
la sortie centrale (7) est fabriquée à partir d'un matériau flexible.

6. Dispositif de préparation de boissons selon l'une des revendications citées ci-dessus,
**caractérisé en ce que**
chacun des mécanismes de distribution (5, 6) présente respectivement une buse de distribution (11, 12).

7. Dispositif de préparation de boissons selon l'une des revendications 1 à 6,
**caractérisé en ce que**
la sortie centrale (7) présente une tubulure de raccordement des fluides (2) permettant la canalisation de vapeur d'eau, une tubulure de raccordement des fluides (3) permettant la canalisation de café ou de cacao, ainsi qu'une tubulure de raccordement des fluides (4) permettant la canalisation de lait.

8. Dispositif de préparation de boissons selon l'une des revendications 1 à 7,
**caractérisé en ce que**
la sortie centrale (7) est un élément constituant d'une unité de distribution (13), laquelle est conçue de manière à pouvoir être réglée en hauteur.

9. Dispositif de préparation de boissons selon la revendication 8,
**caractérisé en ce que**
l'unité de distribution (13) est disposée dans un renfoncement (14) de la façade (15) du dispositif de préparation de boissons (1).

10. Dispositif de préparation de boissons selon l'une des revendications 1 à 9,
**caractérisé en ce que**
le dispositif de préparation de boissons (1) se présente sous la forme d'un appareil encastré pour une armoire de cuisine (16).
